## Europäisches Patentamt
## European Patent Office
## Office européen des brevets

(19)

(11) Veröffentlichungsnummer: **0 171 356**
**B1**

(12)

# EUROPÄISCHE PATENTSCHRIFT

(45) Veröffentlichungstag der Patentschrift:
04.11.87

(21) Anmeldenummer: 85810313.8

(22) Anmeldetag: 08.07.85

(51) Int. Cl.⁴: **C 09 D 5/44,** C 25 D 13/08, C 08 G 65/10, C 08 G 59/72, C 08 F 2/58

(54) Verfahren zum Polymerisieren von kationisch polymerisierbaren Materialien.

(30) Priorität: 14.07.84 GB 8417966

(43) Veröffentlichungstag der Anmeldung:
12.02.86 Patentblatt 86/7

(45) Bekanntmachung des Hinweises auf die Patenterteilung:
04.11.87 Patentblatt 87/45

(84) Benannte Vertragsstaaten:
CH DE FR GB IT LI NL SE

(56) Entgegenhaltungen:
FR-A-1 222 925
GB-A-2 101 619
US-A-4 416 752

CHEMICAL ABSTRACTS, Band 85, 1976, Seite 107, Nr. 144922e, Columbus, Ohio, US

(73) Patentinhaber: CIBA- GEIGY AG, Klybeckstrasse 141, CH- 4002 Basel (CH)

(72) Erfinder: Banks, Christopher Paul, 105 Ross Close, Saffron Walden Essex CB11 4DU (GB)
Erfinder: Irving, Edward, 41, Swaffham Road, Burwell Cambridge CB5 0AN (GB)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Polymerisieren von kationisch polymerisierbaren Materialien und die Anwendung dieses Verfahrens zum Beschichten von leitenden Oberflächen, besonders Metalloberflächen, indem ein kationisch polymerisierbares Material in Gegenwart eines Bortrifluorid-Komplexes auf der Oberfläche einer Anode polymerisiert wird.

Leitende Substrate wurden bisher in Gegenwart von bestimmten Salzen, die sich elektrolytisch zersetzen, mit kationisch polymerisierbaren Materialien beschichtet. Die U.S. Patentschrift Nr. 4 416 752 z. B. beschreibt ein Beschichtungsverfahren, bei dem ein leitendes Substrat als Anode in einem elektrolysierten Gemisch aus einem kationisch polymerisierbaren Material und einem Aryliodonium- oder Arylsulfoniumsalz mit einem Anion $MQ_d$ verwendet wird. Dabei bedeutet M ein Metall oder ein Metalloid ausgewählt aus Bor, Phosphor, Antimon und Arsen, Q ist ein Halogen und d bedeutet 4-6, wie z. B. ein Tetrafluorborat-Anion. Geeignete kationisch polymerisierbare Materialien sind z. B. Mono- und Polyepoxide, Vinylverbindungen, cyclische Äther, cyclische Ester und Gemische davon.

Verglichen mit bekannten Verfahren zur galvanischen Abscheidung von Polymeren hat dieses Verfahren den Vorteil, dass die polymerisierbaren Materialien selbst nicht besonders formuliert werden müssen, damit sie galvanisch abgeschieden werden können.

Die in der genannten U.S. Patentschrift beschriebenen Salze sind in zweifacher Hinsicht nachteilig. Einerseits sind sie lichtempfindlich, so dass Gemische aus kationisch polymerisierbaren Materialien und solchen Salzen - ausser sie werden in völliger Dunkelheit aufbewahrt - nur eine beschränkte Lagerstabilität aufweisen. Solche Gemische enthaltende galvanische Abscheidungsbäder müssen unter sorgfältig kontrollierten Lichtverhältnissen angewendet werden, damit ein frühzeitiges Gelieren vermieden wird. Andererseits ist die Zubereitung dieser Gemische schwierig und damit kostspielig, so dass sich das beanspruchte Verfahren zur Zeit in grosstechnischem Maßstab nicht in wirtschaftlicher Weise durchführen lässt.

Die Verwendung eines quaternären Ammoniumhexafluorophosphats oder -tetrafluoroborates als Elektrolyt für die elektroinitierte kationische Polymerisation von verschiedenen Epoxidharzen ist ebenfalls bekannt und wird in Makromol. Chem., Rapid. Commun. 4, 259-261 (1983), British Polymer Journal 15, 179-182 (1983) und in British Polymer Journal 15, 187-189 (1983) beschrieben. In diesen Publikationen werden Epoxycyclohexan, 1,2-Epoxy-4-epoxyäthylcyclohexan, Epoxycyclopentan und epoxidiertes Styrol bei konstanter Potentialelektrolyse unter Anwendung einer Spannung von bis zu 3 Volt während der Dauer von etwa 1,5 Stunden polymerisiert. Um zu vermeiden, dass der Elektrolyt in die Reaktion eingreift, wird die Spannung niedrig gehalten. Es wurde nun gefunden, dass auf den Einsatz solcher Salze verzichtet werden kann. Wenn man sie durch im Handel erhältliche oder leicht herstellbare Bortrifluorid-Komplexe ersetzt, kann beim Durchleiten von elektrischem Strom durch das Gemisch eine rasche Polymerisation von kationisch polymerisierbaren Materialien erzielt werden.

Bei allen galvanischen Polymerisationsverfahren kann nicht vermieden werden, dass Spuren des Polymerisationsmittels in dem polymerisierten Harz zurückbleiben. Bei Verwendung von Salzen beeinträchtigen diese Spuren die elektrischen Eigenschaften des Harzes. Bortrifluorid-Komplexe hingegen beeinträchtigen die elektrischen Eigenschaften des Harzes nicht, da sie kovalent gebunden sind. Zudem ermöglichen in dem polymerisierbaren Harz verbliebene Spuren des Komplexes ein Nachhärten des Harzes beim Erhitzen.

Gegenstand der Erfindung ist somit ein Verfahren zum Polymerisieren von kationisch polymerisierbaren Materialien, indem man durch ein Stoffgemisch enthaltend

(A) ein kationisch polymerisierbares Material und

(B) einen Bortrifluoridkomplex

zwischen einer mit dem Stoffgemisch in Berührung stehenden Anode und Kathode elektrischen Strom durchleitet, wodurch auf der Anode polymerisiertes Material abgeschieden wird.

Das erfindungsgemässe Verfahren eignet sich insbesondere zum Beschichten von leitenden Substraten. Gegenstand der Erfindung ist somit auch ein Verfahren zum Beschichten von leitenden Substraten, indem man das erfindungsgemässe Polymerisationsverfahren unter Verwendung eines leitenden Substrats als Anode durchführt, sowie das nach diesem Verfahren erhaltene, mit einem Polymer beschichtete, leitende Substrat.

Die einzusetzenden Bortrifluoridkomplexe können fest oder flüssig sein sie sollen bei der Lagerung bei Raumtemperatur stabil sein, müssen jedoch beim Durchleiten von elektrischem Strom schnell reaktive Spezies bilden. In Betracht kommen beispielsweise Komplexe mit organischen oder anorganischen Materialien, wobei die ersteren bevorzugt sind. Als Beispiele seien Komplexe von $BF_3$ mit Alkoholen, Äthern, Säuren, Aminen, Amiden, Estern oder tertiären Phosphinen genannt. Bevorzugt sind Komplexe mit Aminen, wie N-Heterocyclen, amin-substituierten Heterocyclen, aliphatischen, cycloaliphatischen oder araliphatischen Aminen sowie Trialkyl- oder Triarylphosphinen. Besonders bevorzugt sind Komplexe mit Pyridin, Piperidin, Mono-, Di- und Triäthylamin, Mono-, Di- und Trimethylamin, Isophorondiamin, Benzylamin, Cyclohexylamin, N,N,N',N'-Tetramethylhexamethylendiamin, Trimethylphosphin und Triphenylphosphin.

Durch Vermischen mit einem Bortrifluoridkomplex und Elektrolyse können an sich beliebige kationisch polymerisierbare Materialien gehärtet oder polymerisiert werden. Beispiele solcher polymerisierbarer Materialien sind Oxetane, Thiirane, Dihydropyrane oder Tetrahydrofurane. Das kationisch polymerisierbare Material ist bevorzugt ein 1,2-Monoepoxid oder Episulfid mit 2-20 Kohlenstoffatomen, wie Äthylenoxid, Äthylensulfid, Propylenoxid oder Propylensulfid, ein Epoxidharz, besonders ein cycloaliphatisches Expoxidharz, wie 3,4-Epoxycyclohexylmethyl-3',4'-epoxycyclohexancarboxylat oder dessen 6,6'-Dimethylderivat, Äthylenglykol-bis(3,4-epoxycyclohexancarboxylat), Bis(3,4-epoxycyclohexylmethyl)adipat, Dicyclopentadiendioxid oder Vinylcyclohexendioxid, ein gegebenenfalls vorverlängerter Polyglycidyläther eines mehrwertigen Alkohols, wie 1,4-Butandiol oder Diäthylenglykol, oder eines mehrwertigen Phenols, wie 2,2-Bis(4-hydroxyphenyl)-propan oder Phenol-Aldehyd-Novolake, ein Polyglycidylester einer Polycarbonsäure, wie Phthalsäure, Tetrahydrophthalsäure, Trimellitsäure oder Pyromellitsäure, ein Phenoplast, ein Aminoplast, wie Harnstoff-Formaldehyd- oder Melamin-Formaldehyd-Harze, oder eine andere Methylolverbindung, wie Poly(N-methylol)-derivate eines Polycarbonsäureamids. Es können auch kationisch polymerisierbare äthylenisch ungesättigte Materialien, wie Diketen, Vinyläther, Vinylcarbazol oder Styrol, verwendet werden.

Das erfindungsgemässe Verfahren wird zweckmässig so durchgeführt, dass man das polymerisierbare Material mit dem Komplex in einem organischen oder wässrigorganischen Lösungsmittel vermischt, als Anode ein inertes leitendes Material, z. B. ein zu beschichtendes Substrat, und als Kathode ein inertes Metall einführt, und Strom durchleitet, bis sich auf der Anode eine ausreichend dicke Schicht des polymerisierten Materials gebildet hat. Die Anode wird dann aus dem Bad entfernt und getrocknet, im allgemeinen bei erhöhter Temperatur. Durch Umpolen des Stroms oder durch Verwendung von Wechselstrom kann auf beiden Elektroden polymerisiertes Material abgeschieden werden. Die einzusetzende Menge an Komplex kann innerhalb breiter Grenzen variieren, liegt jedoch normalerweise zwischen 0,1 und 10 Gew.%, bezogen auf das Gewicht des polymerisierbaren Materials. Die Konzentration des polymerisierbaren Materials in der Lösung beträgt im allgemeinen zwischen 5 und 50 Gew.%. Die Lösung wird vorzugsweise bei Raumtemperatur gehalten, kann aber gewünschtenfalls auch erhitzt oder gekühlt werden. Temperaturen zwischen 0 und 80°C haben sich als zufriedenstellend erwiesen. Als Lösungsmittel in diesem Verfahren kommen z. B. Ketone, wie Aceton, Methyläthylketon und Methylisobutylketon, Alkohole, wie Methanol oder Äthanol, halogenierte Kohlenwasserstoffe, wie Dichlormethan, Chloroform und Tetrachloräthan, Nitroverbindungen, wie Nitromethan und Nitrobenzol, und Gemische davon in Betracht, sowie, falls das Lösungsmittel mit Wasser mischbar ist, wässrige Gemische davon. Im allgemeinen werden Spannungen zwischen 5 V und 150 V, vozugsweise 100 V, beispielsweise von 15 V bis 50 V oder von 50 V bis 100 V, verwendet. Für die Abscheidung einer zwischen 1 und etwa 30 Mikrometer dicken Schicht wird im allgemeinen eine Stromstärke zwischen 10 mA und 10 A benötigt.

Wie bereits angegeben wurde, eignet sich das erfindungsgemässe Verfahren insbesondere für die Beschichtung von leitfähigen Substraten. Geeignete Substrate sind beispielsweise die Metalle, insbesondere eisenhaltige Metalle, wie Stahl und Weissblech, Kupfer und Aluminium, sowie metallisierte, nichtleitfähige Materialien, wie metallkaschierte Laminate aus Polymeren.

Die Erfindung wird durch die folgenden Beispiele näher erläutert. Darin sind alle Teile Gewichtsteile.

**Beispiel 1:**

1 Teil 2,2-Bis(4-glycidyloxyphenyl)propan mit einem Epoxidgehalt von 5,2 Äquivalenten/kg und 0,03 Teile Bortrifluorid-Monoäthylamin-Komplex werden in einem Gemisch aus 1 Teil Dichlormethan und 1 Teil Aceton gelöst. Bei Raumtemperatur wird das Harz unter Verwendung einer Kathode aus Weissblech während 30 Sekunden bei 30 Volt auf einer Weissblech-Anode abgeschieden. Die Weissblech-Anode wird aus dem Bad entfernt und 5 Minuten bei 90°C getrocknet. Dabei erhält man eine klebefreie, 10 Mikrometer dicke Beschichtung.

Wird das Beispiel ohne Durchleiten von Strom wiederholt, so bildet sich auf dem Weissblech eine klebrige, nicht gehärtete Schicht.

**Beispiel 2:**

1 Teil 2,2-Bis(4-glycidyloxyphenyl)propan mit einem Epoxidgehalt von 5,2 Äquivalenten/kg und 0,03 Teile Bortrifluorid-Triäthylamin-Komplex werden in einem Gemisch aus 1 Teil Dichlormethan und 1 Teil Aceton gelöst. Das Harz wird unter Verwendung einer Weissblech-Kathode während 5 Sekunden bei 30 Volt auf einer Weissblech-Anode abgeschieden. Die Anode wird aus dem Bad entfernt und 5 Minuten bei 90°C getrocknet. Man erhält eine klebefreie, 9 Mikrometer dicke Schicht.

**Beispiel 3:**

1 Teil 3,4-Epoxycyclohexylmethyl-3',4'-epoxycyclohexancarboxylat und 0,01 Teile Bortrifluorid-Triphenylphosphin-Komplex werden in einem Gemisch aus 1 Teil Dichlormethan und 1 Teil Aceton gelöst. Das Harz wird unter Verwendung einer Weissblech-Kathode während 2 Sekunden bei 100 Volt aut einer Weissblech-Anode abgeschieden. Die Anode wird aus dem Bad entfernt und 5 Minuten bei 90° C getrocknet. Man erhält eine klebefreie, 15 Mikrometer dicke Schicht.

**Beispiel 4:**

1 Teil eines Phenol-Formaldehyd-Resols (Verhältnis Phenol:Formaldehyd = 1:1,4) und 0,02 Teile Bortrifluorid-Äthylamin-Komplex werden in einem Gemisch aus 1,5 Teilen Aceton und 1,5 Teilen Wasser gelöst. Unter Verwendung einer Weissblech-Kathode wird das Harz während 30 Sekunden bei 30 Volt auf einer Weissblech-Anode abgeschieden. Die Weissblech-Anode wird aus dem Bad entfernt und 5 Minuten bei 90° C getrocknet. Man erhält eine klebefreie, 7 Mikrometer dicke Schicht.

**Beispiel 5:**

1 Teil (2,3-Dihydro-4H-pyran-2-yl)methyl-2,3-dihydro-4H-pyran-2-carboxylat und 0,02 Teile Bortrifluorid-Triphenylphosphin-Komplex werden in einem Gemisch aus 1 Teil Dichlormethan und 1 Teil Aceton gelöst. Unter Verwendung einer Weissblech-Kathode wird das Harz während 5 Sekunden bei 100 Volt auf einer Weissblech-Anode abgeschieden. Die Weissblech-Anode wird aus dem Bad entfernt und 5 Minuten bei 90° C getrocknet. Man erhält eine klebefreie, 8 Mikrometer dicke Schicht.

**Beispiel 6:**

1 Teil 3,4 Epoxycyclohexylmethyl-3',4'-epoxycyclohexancarboxylat und 0,3 Teile Bortrifluorid-Isophorondiamin-Komple werden in einem Gemisch aus 1 Teil Aceton und 1 Teil Methanol gelöst. Unter Verwendung einer Weissblech-Kathode wird das polymerisierte Harz während 10 Sekunden bei 30 Volt auf einem als Anode verwendeten kupferkaschierten Laminat abgeschieden. Das kupferkaschierte Laminat wird aus dem Bad entfernt und während 5 Minuten bei 90° C getrocknet. Man erhält eine klebefreie, 9 Mikrometer dicke Schicht.

Wird das Beispiel ohne Durchleiten von Strom wiederholt, so bildet sich auf dem kupferkaschierten Laminat eine klebrige, nicht gehärtete Schicht.

**Beispiel 7:**

1 Teil 3,4-Epoxycyclohexylmethyl-3',4'-epoxycyclohexancarboxylat und 0,02 Teile Bortrifluorid-Trimethylhexamethylendiamin-Komplex werden in einem Gemisch aus 1 Teil Aceton und 1 Teil Methanol gelöst. Unter Verwendung einer Weissblech-Kathode scheidet sich während 5 Sekunden bei 30 Volt auf einem als Anode verwendeten kupferkaschierten Laminat polymerisiertes Harz ab.

Das kupferkaschierte Laminat wird aus dem Bad entfernt und 5 Minuten bei 90° C getrocknet. Man erhält eine klebefreie Schicht von 8 Mikrometern.

Wenn das Beispiel ohne Durchleiten von Strom wiederholt wird, so erhält man eine klebrige, ungehärtete Schicht auf dem kupferkaschierten Laminat.

**Beispiel 8:**

1 Teil 2,2-Bis(4-glycidyloxyphenyl)propan mit einem Epoxidgehalt von 5,2 Äquivalenten/kg und 0,03 Teile Bortrifluorpiperidin-Komplex werden in einem Gemisch aus 1 Teil Aceton und 1 Teil Methanol gelöst. Unter Verwendung einer Weissblech-Kathode scheidet sich in 5 Sekunden bei 20 Volt auf der Stahl-Anode polymerisiertes Harz ab. Die Stahl-Anode wird aus dem Bad entfernt und 5 Minuten bei 90° C getrocknet. Man erhält eine klebefreie Schicht von 5 Mikrometern.

Wird das Beispiel ohne Durchleiten von Strom wiederholt, so ist die Schicht auf der Stahl-Anode klebrig und ungehärtet.

**Beispiel 9:**

1 Teil 2,2-Bis(4-glycidyloxyphenyl)propan mit einem Epoxidgehalt von 5,2 Äquivalenten/kg und 0,03 Teile Bortrifluoridbenzylamin-Komplex werden in einem Gemisch aus 1 Teil Aceton und 1 Teil Methanol gelöst. Unter Verwendung einer Weissblech-Kathode wird während 60 Sekunden bei 80 Volt auf der Aluminium-Anode polymerisiertes Harz abgeschieden.

Die Aluminium-Anode wird aus dem Bad entfernt und 5 Minuten bei 90° C getrocknet. Man erhält eine klebefreie, 3 Mikrometer dicke Schicht.

Wird das Beispiel ohne Durchleiten von Strom wiederholt, so entsteht auf der Aluminium-Anode eine klebrige, ungehärtete Schicht.

**Beispiel 10:**

1 Teil 2,2-Bis(4-glycidyloxyphenyl)propan mit einem Epoxidgehalt von 5,2 Äquivalenten/kg und 0,02 Teile Bortrifluoriddiäthylamin-Komplex werden in einem Gemisch aus 1 Teil Aceton und 1 Teil Methanol gelöst. Unter Verwendung einer Weissblech-Kathode wird während 10 Sekunden bei 30 Volt auf einem als Anode verwendeten kupferkaschierten Laminat polymerisiertes Harz abgeschieden. Das kupferkaschierte Laminat wird aus dem Bad entfernt und 5 Minuten bei 90°C getrocknet. Man erhält eine klebefreie, 5 Mikrometer dicke Schicht.

Wird das Beispiel ohne Durchleiten von Strom wiederholt, so ist die Schicht auf der Anode klebrig und ungehärtet.

**Beispiel 11:**

1 Teil 2,2-Bis(4-glycidyloxyphenyl)propan mit einem Epoxidgehalt von 5,2 Äquivalenten/kg und 0,03 Teile Bortrifluoridpyridin-Komplex werden in einem Gemisch aus 1 Teil Aceton und 1 Teil Methanol gelöst. Unter Verwendung einer Weissblech-Kathode wird während 10 Sekunden bei 30 Volt auf einer Weissblech-Anode polymerisiertes Harz abgeschieden. Die Weissblech-Anode wird aus dem Bad entfernt und 5 Minuten bei 90°C getrocknet. Man erhält eine klebefreie, 8 Mikrometer dicke Schicht.

Wird das Beispiel ohne Durchleiten von Strom wiederholt, so ist die Schicht auf der Weissblech-Anode klebrig und ungehärtet.

**Patentansprüche**

1. Verfahren zum Polymerisieren von kationisch polymerisierbarem Material, dadurch gekennzeichnet, dass man durch ein Stoffgemisch, enthaltend

(A) ein kationisch polymerisierbares Material und

(B) einen Bortriflouridkomplex

zwischen einer mit dem Stoffgemisch in Berührung stehenden Anode und Kathoden elektrischen Strom durchleitet, wodurch auf der Anode polymerisiertes Material abgeschieden wird.

2. Verfahren nach Anspruch 1, worin der Bortriflourid-Komplex ein Komplex von $BF_3$ mit einem Alkohol, einem Äther, einer Säure, einem Amin, einem Ester oder einem tertiären Phosphin ist.

3. Verfahren nach Anspruch 2, worin der Bortrifluorid-Komplex ein Komplex von $BF_3$ mit einem N-Heterocyclus, einem amin-substituierten Heterocyclus, einem aliphatischen, cycloaliphatischen oder araliphatischen Amin oder einem Trialkyl- oder Triarylphosphin ist.

4. Verfahren nach Anspruch 3, worin der Bortrifluorid-Komplex ein Komplex von $BF_3$ mit Pyridin, Piperidin, Mono-, Di- oder Triäthylamin, Mono, Di- oder Trimethylamin, Isophorondiamin, Benzylamin, Cyclohexylamin, N,N,N',N'-Tetramethylhexamethylendiamin, Trimethylphosphine oder Triphenylphospin ist.

5. Verfahren nach einem der vorhergehenden Ansprüche, worin das kationisch polymerisierbare Material ein Oxetan, Thiiran, Dihydropyran, Tetrahydrofuran, 1,2-Mono-epoxid oder Episulfid mit 2 - 20 Kohlenstoffatomen, ein Expoxidharz, Phenoplast, Aminoplast oder äthylenisch ungesättigtes Material ist.

6. Verfahren nach Anspruch 5, worin das kationisch polymerisierbare Material 3,4-Epoxycyclohexylmethyl-3',4'-epoxycyclohexancarboxylat oder dessen 6,6'-Dimethylderivat, Äthylenglykol-bis(3,4-epoxycyclohexancarboxylat), Bis(3,4-Epoxycyclohexylmethyl)adipat, Dicyclopentadiendioxid oder Vinylcyclohexendioxid, ein gegebenenfalls vorverlängerter Polyglycidyläther eines mehrwertigen Alkohols oder eines mehrwertigen Phenols oder ein Polyglycidylester einer Polycarbonsäure ist.

7. Verfahren nach einem der vorhergehenden Ansprüche, dadurch gekennzeichnet, dass man den Komplex in einer Menge von 0,1 bis 10 Gew.%, bezogen auf das Gewicht des polymerisierbaren Materials, einsetzt.

8. Verfahren nach einem der vorhergehenden Ansprüche, dadurch gekennzeichnet, dass man das polymerisierbare Material mit dem Komplex in einem organischen oder wässrig-organischen Lösungsmittel vermischt, als Anode ein inertes leitendes Material und als Kathode ein inertes Metall einführt und Strom durchleitet, bis auf der Anode eine ausreichend dicke Schicht des polymerisierten Materials abgeschieden ist.

9. Verfahren nach Anspruch 8, worin die Konzentration des polymerisierbaren Materials in der Lösung zwischen 5 und 50 Gew.% beträgt.

10. Verfahren nach Anspruch 8 oder 9, dadurch gekennzeichnet, dass man als Lösungsmittel ein Keton, einen halogenierten Kohlenwasserstoff, eine Nitroverbindung oder ein Gemisch davon verwendet.

11. Verfahren nach einem der vorhergehenden Ansprüche, dadurch gekennzeichnet, dass die Stromspannung zwischen 5 und 150 V beträgt.

12. Verfahren zum Beschichten von leitenden Substraten, dadurch gekennzeichnet, dass man das Polymerisationsverfahren gemäss einem der vorhergehenden Ansprüche unter Verwendung eines leitenden Substrates als Anode durchführt.

13. Leitendes Substrat, das mit einem nach dem Verfahren gemäss Anspruch 12 erhaltenen Polymer beschichtet ist.

**Claims**

1. A method of polymerizing a cationically polymerizable material which comprises passing an electric current through a composition comprising

(A) a cationically polymerizable material, and

(B) a boron trifluoride complex,

between an anode and a cathode in contact with the composition, whereby polymerized material is deposited on the anode.

2. A method as claimed in claim 1 in which the boron trifluoride complex is a complex of $BF_3$ with an alcohol, an ether, an acid, an amine, an ester, or a tertiary phosphine.

3. A method as claimed in claim 2 in which the boron trifluoride complex is a complex of $BF_3$ with an N-heterocycle, an amine-substituted heterocycle, an aliphatic, cycloaliphatic, or araliphatic amine or with a trialkylphosphine or triarylphosphine.

4. A method as claimed in claim 3 in which the boron trifluoride complex is a complex of $BF_3$ with pyridine, piperidine, mono-, di-, or triethylamine, mono-, di-, or trimethylamine, isophoronediamine, benzylamine, cyclohexylamine, N,N,N',N'-tetramethylhexamethylenediamine, trimethylphosphine or triphenylphosphine.

5. A method as claimed in any previous claim in which the cationically polymerizable material is an oxetane, thiirane, dihydropyrane, tetrahydrofuran, 1,2-monoepoxide or episulfide having from 2 to 20 carbon atoms, an epoxide resin, phenoplast, aminoplast or ethylenically unsaturated material.

6. A method as claimed in claim 5 in which the cationically polymerizable material is 3,4-epoxycyclohexylmethyl-3',4'-epoxycyclohexanecarboxylate or its 6,6'-dimethyl derivative, ethyleneglycol-bis(3,4-epoxycyclohexanecarboxylate), bis(3,4-epoxycyclohexylmethyl)adipate, dicyclopentadienedioxide or vinylcyclohexenedioxide, a polyglycidyl ether, which may have been advanced, of a polyhydric alcohol or a polyhydric phenol, or a polyglycidyl ester of a polycarboxylic acid.

7. A method as claimed in any previous claim wherein the complex is used in an amount of 0.1 to 10 % by weight, based on the weight of the polymerizable material.

8. A method as claimed in any previous claim that is effected by mixing the polymerizable material with the complex in an organic or aqueous organic solvent, inserting an inert conductive material as the anode and an inert metal as the cathode and passing a current through until a sufficiently thick layer of the polymerized material has been deposited on the anode.

9. A method as claimed in claim 8 in which the concentration of the polymerizable material in the solution is from 5 % to 50 % by weight.

10. A method as claimed in claim 8 or 9 wherein a ketone, a halogenated hydrocarbon, a nitro compound or a mixture thereof is used as the solvent.

11. A method as claimed in any previous claim in which the voltage used is 5 V to 150 V.

12. A method for the coating of a conductive substrate wherein the polymerization method as claimed in any previous claim is carried out using a conductive substrate as the anode.

13. A conductive substrate which is coated with a polymer obtained according to the method of claim 12.

**Revendications**

1. Procédé de polymérisation de matières polymérisables par polymérisation cationique, procédé caractérisé en ce que dans un mélange contenant:

(A) une matière polymérisable par voie cationique, et

(B) un complexe du trifluorure de bore on fait passer un courant électrique entre une cathode et une anode en contact avec le mélange, la matière polymérisée se déposant ainsi sur l'anode.

2. Procédé selon la revendication 1 dans lequel le complexe de trifluorure de bore est un complexe formé avec un alcool, un éther, un acide, une amine, un ester ou une phosphine tertiaire.

3. Procédé selon la revendication 2 dans lequel le complexe de trifluorure de bore est un complexe formé avec un composé hétérocyclique azoté, un composé hétérocyclique ayant un substituant aminé, une amine aliphatique, cycloaliphatique ou araliphatique ou encore une trialkylphosphine ou une triarylphosphine.

4. Procédé selon la revendication 3 dans lequel le complexe de trifluorure de bore est un complexe formé avec la pyridine, la pipéridine, la mono-, di- ou triéthylamine, la mono-, di- ou triméthylamine, l'isophoronediamine, la benzylamine, la cyclohexylamine, la N,N,N',N'-tétraméthyl-hexaméthylène-diamine, la triméthylphosphine et la triphénylphosphine.

5. Procédé selon l'une quelconque des revendications précédentes dans lequel la matière polymérisable par polymérisation cationique est un oxéthanne, un thiirane, un dihydropyranne, un tétrahydrofuranne, un monoépoxyde-1,2 ou un épisulfure ayant de 2 à 20 atomes de carbone, une résine époxyde, un phénoplaste, un aminoplaste ou une matière à insaturation éthylénique.

6. Procédé selon la revendication 5 dans lequel la matière polymérisable est le 3',4'-époxycyclohexanecarboxylate de 3,4-époxycyclohexylméthyle ou son dérivé 6,6'-diméthylique, le bis-(3,4-époxycyclohexane-carboxylate) d'éthylène-glycol, l'adipate de bis-(3,4-époxy-cyclohexylméthyle), le dioxyde de dicyclopentadiène ou le dioxyde de vinylcyclohexène, un éther polyglycidylique à chaîne éventuellement préallongée, d'un polyol ou d'un polyphénol, ou encore un ester polyglycidylique d'un acide polycarboxylique.

7. Procédé selon l'une quelconque des revendications précédentes, caractérisé en ce que le complexe est ajouté dans une proportion de 0,1 et 10 % du poids de la matière polymérisable.

8. Procédé selon l'une quelconque des revendications précédentes, caractérisé en ce que l'on mélange la matière polymérisable avec le complexe dans un solvant organique ou hydro-organique, dans le mélange on place en anode un matériau conducteur inerte et en cathode un métal inerte et on fait passer le courant jusqu'à ce qu'il se soit déposé sur l'anode une couche de matière polymérisée suffisamment épaisse.

9. Procédé selon la revendication 8 dans lequel la teneur de la solution en matière polymérisable est de 5 à 50 % en poids.

10. Procédé selon la revendication 8 ou 9, caractérisé en ce que l'on emploie comme solvant une cétone, un hydrocarbure halogéné, un composé nitré ou un mélange de plusieurs de ces solvants.

11. Procédé selon l'une quelconque des revendications précédentes, caractérisé en ce que l'on opère sous une tension comprise entre 5 et 150 V.

12. Procédé de revêtement de substrats conducteurs, caractérisé en ce que l'on effectue le procédé de polymérisation selon l'une quelconque des revendications précédentes en utilisant comme anode le substrat conducteur à revêtir.

13. Substrat conducteur revêtu d'une matière polymère formée suivant le procédé de la revendication 12.